# EUROPEAN PATENT APPLICATION

(11) **EP 4 393 876 A1**
(43) Date of publication of application: **03.07.2024**
(21) Application number: 21970051.5
(22) Date of filing: 28.12.2021
(51) Int. Cl.: C01B 32/198, C01B 33/02, C01B 33/18, H01M 10/02, H01M 4/62, H01M 4/583, H01M 10/052, H01M 4/02

(54) **FUNCTIONANLIZED GRAPHENE THAT SELF-ADSORBS ONTO SILICON OR SILICON COMPOUND, HYBRID MATERIAL INCLUDING SILICON OR SILICON COMPOUND HAVING FUNCTIONALIZED GRAPHENE ADSORBED ONTO SURFACE, AND ANODE MATERIAL FOR LITHIUM SECONDARY BATTERY INCLUDING HYBRID MATERIAL**

(71) Applicant: BestGraphene Co., Ltd, Yeoju-si, Gyeonggi-do 12616 (KR)
(72) Inventor: KIM, Myeong Gi, Yongin-si Gyeonggi-do 16934 (KR); HONG, Sung Min, Yeoju-si Gyeonggi-do 12637 (KR); OH, Ji Taek, Yeoju-si Gyeonggi-do 12653 (KR); KIM, Jung Hoon, Yeoju-si Gyeonggi-do 12624 (KR); SEO, Jae Young, Yeoju-si Gyeonggi-do 12656 (KR)
(74) Representative: Sander, Rolf
(86) International application number: PCT/KR2021/019990
(87) International publication number: WO 2023/127981

(57) **Abstract**

The present invention relates to functionalized graphene having a functional group self-adsorbed onto silicon or a silicon compound, wherein the functionalized graphene has an interplanar distance of about 0.3558 nm to about 0.4790 nm.

## Description

### [TECHNICAL FIELD]

The present invention relates to functionalized graphene self-adsorbed onto silicon or a silicon compound, a hybrid material including silicon or a silicon compound with the functionalized graphene self-adsorbed onto the surface thereof, and a negative electrode material for a lithium secondary battery including the hybrid material.

### [BACKGROUND ART]

Advances in battery technology have promoted the spread of high-performance mobile devices, and in recent years, with the emergence of new technologies such as electric vehicles and drones, the demand for improved battery performance has increased.

The most widely used battery in recent years is a lithium secondary battery. A lithium secondary battery is a battery using the principle that lithium ions move from a negative electrode to a positive electrode during a discharge process, and the lithium ions move back from the positive electrode to the negative electrode during charging and return to their original places.

A lithium secondary battery is composed of a positive electrode, a negative electrode, an electrolyte, and a separator. In order to increase the energy density of a lithium secondary battery, active research is being conducted on technologies for increasing the capacity of a positive electrode active material and a negative active material, increasing the density of an electrode plate, thinning a separator, increasing charge/discharge voltages, and the like. However, in order to increase the commercialization of a lithium secondary battery, it is required to secure the stability of the lithium secondary battery while increasing the energy density thereof. Therefore, research on increasing the energy density of a lithium secondary battery has been focused on increasing the capacity of a positive electrode active material and a negative electrode active material.

Currently, graphite is the most widely used negative electrode material for a lithium secondary battery. Graphite has a theoretical capacity of about 372 mAh/g, and has the advantage of having a stable crystal structure. However, as the demand for a high-capacity lithium secondary battery increases, a negative electrode active material using a new material having a greater capacity than graphite is being developed. In particular, silicon is capable of holding about 4.4 lithium per silicon, and accordingly, the silicon has a high theoretical capacity of about 4,200 MΩ/g, and thus, has emerged as a new negative electrode material for replacing graphite.

However, in order to use silicon a negative electrode material for a lithium secondary battery, stability issues must be resolved. As silicon accepts lithium, it causes a volume expansion of about 300 % to about 400 %, which results in a problem of micronization. In addition, silicon has the problem that its capacity is not maintained due to excessive formation of a solid electrolyte interphase (SEI) layer during charge and discharge processes.

In order to solve the volume expansion problem and the SEI layer formation problem of a silicon negative electrode material, a technology of covering silicon with amorphous graphite has been proposed, but properties of the negative electrode material have not reached a satisfactory level. In recent years, there have been attempts to solve the volume expansion problem and the SEI layer problem of a silicon negative electrode material by using excellent physical properties of graphene, but the attempts have not been commercialized due to the problem of low dispersibility caused by self-cohesiveness of graphene and the low adsorption performance thereof with respect to silicon or a silicon compound.

### [DISCLOSURE OF THE INVENTION]

### [TECHNICAL PROBLEM]

The present invention provides functionalized graphene self-adsorbed onto silicon or a silicon compound.

The present invention also provides a hybrid material including silicon or a silicon compound with functionalized graphene self-adsorbed onto the surface thereof.

The present invention also provides a negative electrode material for a lithium secondary battery, the negative electrode material including a hybrid material which includes silicon or a silicon compound with functionalized graphene self-adsorbed onto the surface thereof.

Meanwhile, other objects of the present invention that are not specified will be further considered within the scope that can be easily derived from the following detailed description and the effects thereof.

### [TECHNICAL SOLUTION]

In order to achieve the objectives proposed above, the following solution means are proposed.

In accordance with an exemplary embodiment of the present invention, there is provided functionalized graphene which is functionalized graphene having a functional group self-adsorbed onto silicon or a silicon compound, wherein the functionalized graphene has an interplanar distance of about 0.3558 nm to about 0.4790 nm.

In the exemplary embodiment, the functionalized graphene may include about 73 atomic% to about 90 atomic% of carbon (C), about 5 atomic% to about 25 atomic% of oxygen (O), and about 2 atomic% to about 20 atomic% of nitrogen (N).

In the exemplary embodiment, the functionalized graphene may have a zeta potential of about 40 mV or greater.

In the exemplary embodiment, the functional group of the functionalized graphene may be an amine group or an amide group.

In accordance with another exemplary embodiment of the present invention, a hybrid material includes silicon or a silicon compound, and functionalized graphene self-adsorbed onto the surface of the silicon or the silicon compound, wherein the functionalized graphene has an interplanar distance of about 0.3558 nm to about 0.4790 nm.

In the other exemplary embodiment, the functionalized graphene may be bonded to the surface of the silicon or the silicon compound by electrostatic bonding, hydrogen bonding, and covalent bonding.

In the other exemplary embodiment, the hybrid material may exhibit a D peak and a G peak in a Raman spectrum.

In the other exemplary embodiment, the functional group of the functionalized graphene may be an amine group or an amide group.

In the other exemplary embodiment, the content of the functionalized graphene with respect to the silicon or the silicon compound may be about 0.02 wt% to about 5 wt%.

In the other exemplary embodiment, the silicon compound may be silicon oxide.

In the other exemplary embodiment, the hybrid material may include a core composed of a single particle or a plurality of particles of the silicon or the silicon compound, and a shell formed on the surface of the core, and formed of the functionalized graphene.

In accordance with yet another exemplary embodiment of the present invention, a negative electrode material for a lithium secondary battery includes a hybrid material, graphite, a conductive agent, and a binder, wherein the hybrid material is a hybrid material according to any one of claims 5 to 10.

### [EFFECTS OF THE INVENTION]

The functionalized graphene according to an embodiment of the present invention is self-adsorbed onto the surface of silicon or a silicon compound by being bonded to the surface of the silicon or the silicon compound by electrostatic bonding, hydrogen bonding, and covalent bonding.

Accordingly, the hybrid material according to another embodiment of the present invention has an advantage of being stable since the functionalized graphene is strongly bonded to the surface of the silicon or the silicon compound by electrostatic bonding, hydrogen bonding, and covalent bonding.

Furthermore, the negative electrode material for a lithium secondary battery according to yet another embodiment of the present invention uses the hybrid material including the silicon or the silicon compound with the functionalized graphene self-adsorbed onto the surface thereof, and thus has an effect of having a charge capacity of about 1600 mAh/g or greater, a discharge capacity of about 1500 mAh/g or greater, an initial efficiency of about 90% or greater, and a capacity retention rate (50 times) of about 95% or greater.

Meanwhile, although not explicitly stated herein, it should be understood that effects described in the following specification that are expected by the technical features of the present invention and their provisional effects are treated as described in the specification of the present invention.

### [BRIEF DESCRIPTION OF THE DRAWINGS]

FIG. 1 is a reference diagram for describing the self-adsorption of functionalized graphene onto silicon or a silicon compound in accordance with an exemplary embodiment of the present invention.
FIG. 2 shows the zeta potential measurement results of functionalized graphene in accordance with an exemplary embodiment of the present invention and graphene oxide and non-oxidized graphene of comparative examples.
FIG. 3 is the composition analysis result of functionalized graphene in accordance with an exemplary embodiment of the present invention.
FIG. 4 is a schematic flow chart of a method for manufacturing a hybrid material in accordance with an exemplary embodiment of the present invention.
FIG. 5 shows the results of identifying whether coprecipitation occurs over time during a process of manufacturing a hybrid material by dispersing functionalized graphene in accordance with an exemplary embodiment of the present invention and silicon particles, and whether coprecipitation occurs over time during a process of manufacturing a hybrid material by dispersing graphene oxide of comparative examples and silicon particles.
FIG. 6 shows the result of identifying using SEM that a core-shell structure is spontaneously created after simply mixing a colloid containing functionalized graphene in accordance with an exemplary embodiment of the present invention and silicon particles, followed by coprecipitating and drying the mixture.
FIG. 7 is the Raman spectrum analysis result of a hybrid material in accordance with another exemplary embodiment of the present invention.

The accompanying drawings are exemplified by reference for an understanding of the technical idea of the present invention, and the scope of the present invention is not limited thereto.

### [MODE FOR CARRYING OUT THE INVENTION]

Hereinafter, with reference to the drawings, the configuration of the present invention guided by various embodiments of the present invention, and effects resulting from the configuration will be described. In describing the present invention, detailed descriptions of related known functions will be omitted when it is determined that the detailed descriptions may unnecessarily obscure the gist of the present invention that is apparent to those skilled in the art.

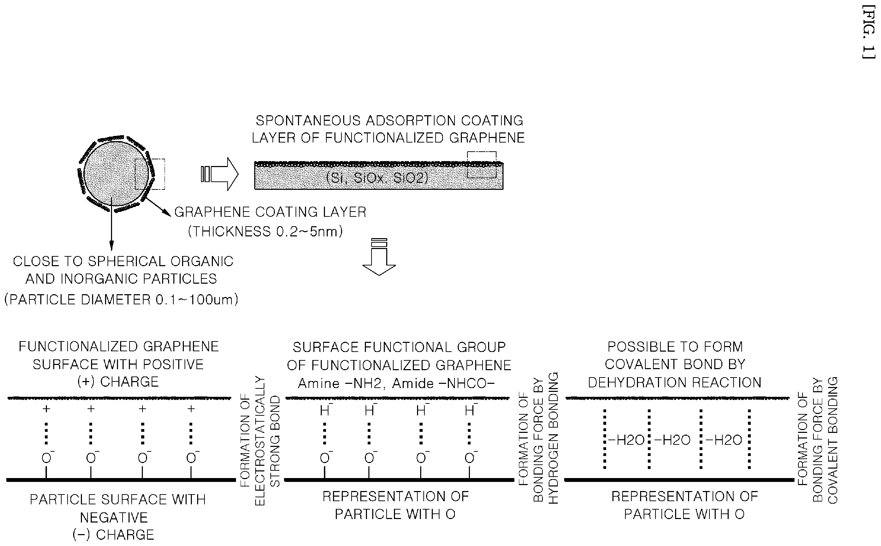

FIG. 1 is a reference diagram for describing the self-adsorption of functionalized graphene onto silicon or a silicon compound in accordance with an exemplary embodiment of the present invention.

The functionalized graphene of the present invention has a functional group self-adsorbed onto silicon or a silicon compound.

The functional group may be an amine group (-NH₂) or an amide group (-NHCO-).

The silicon compound may be at least one of silicon oxide, silicon nitride, or silicon carbide, and may preferably be silicon oxide.

The functionalized graphene of the present invention is self-adsorbed on the surface of silicon or a silicone compound to form a hybrid material.

The hybrid material refers to a material formed by mixing two or more different materials in a macroscopic manner to create a synergistic effect that does not appear in a single material.

In order to commercialize such a hybrid material, it is necessary to firmly bond materials different from each other in a way that is not difficult.

In this regard, the functionalized graphene proposed in the present invention is suitable for forming a hybrid material with silicon or a silicon compound.

When a colloid containing the functionalized graphene of the present invention is mixed with silicon or a silicone compound, the functionalized graphene of the present invention is self-adsorbed onto the silicon or the silicon compound.

That is, it is possible to form a functionalized graphene coating layer on the surface of the silicon or the silicon compound without any separate special process.

For example, it is possible to form a functionalized graphene coating layer in an upper portion of a layer formed of silicon or a silicon compound, or form a shell made of functionalized graphene on the surface of a core formed of a single particle or a plurality of particles of silicon or a silicon compound. The thickness of the coating layer or the thickness of the shell may be about 1 nm to about 5 nm. As to be described below, the hybrid material of the present invention is used as a negative electrode active material in a negative electrode material for a lithium secondary battery, and when the thickness of the coating layer or the thickness of the shell is less than about 1 nm, it is not possible to solve the volume expansion problem and the SEI layer formation problem of a silicon oxide negative electrode material, and when the thickness of the coating layer or the thickness of the shell is greater than about 5 nm, the migration of lithium ions is inhibited.

The reason that the functionalized graphene of the present invention is self-adsorbed onto silicon or a silicon compound is because the functionalized graphene has an interaction with the silicon or the silicon compound, such as electrostatic bonding, hydrogen bonding, and/or covalent bonding.

For example, the functionalized graphene of the present invention has a positive (+) charge, and thus, is electrostatically bonded to the surface of silicon or a silicon compound, which has a (-) charge.

The surface of silicon or a silicon compound either has a negative (-) charge, or may be subjected to surface treatment or pH control of a sol-gel system to have a negative (-) charge, and in particular, silicon oxide has a negative (-) charge due to an oxygen group on the surface thereof.

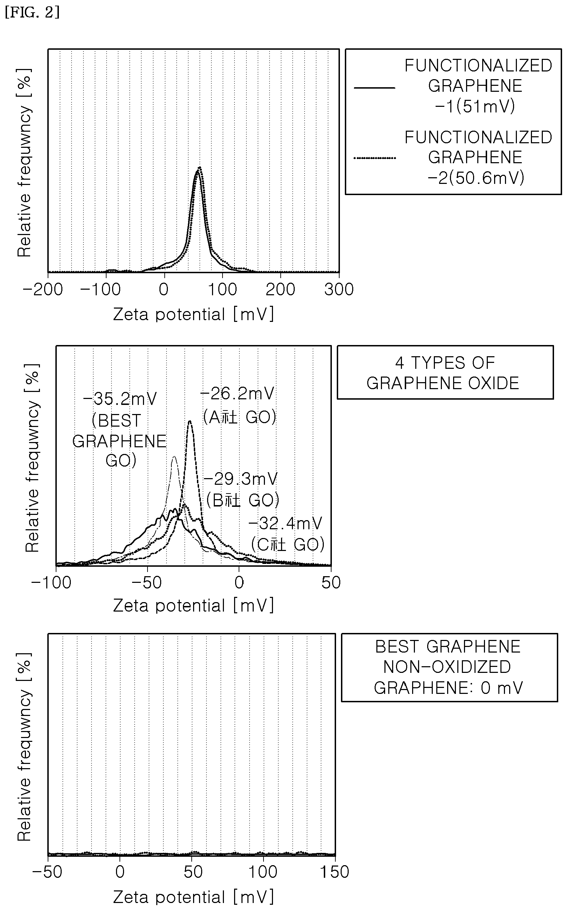

Particularly, as shown in FIG. 2, the zeta potential of the functionalized graphene of the present invention is about 40 mV or greater, preferably about 50 mV or greater.

As described above, if the zeta potential is about 40 mV or greater, preferably about 50 mV or greater, the functionalized graphene has high dispersibility with respect to a solvent used in a process of preparing a negative electrode material for a lithium secondary battery, and is self-adsorbed onto the surface of silicon or a silicon compound by electrostatic bonding.

If the target is silicon oxide, hydrogen (H⁺) of the amine group (-NH₂) or amide group (-NHCO-), which is the functional group of the functionalized graphene of the present invention, and oxygen (O⁻) on the surface of the silicon oxide are hydrogen-bonded, and a covalent bond is formed through a dehydration reaction.

However, in order for the functionalized graphene of the present invention to be self-adsorbed onto silicon or a silicon compound, it is necessary to control the amount of a functional group bonded to graphene.

In general, graphene oxide is known to have an interplanar distance of about 0.85 nm to about 1.25 nm depending on the degree of oxidation, but the functionalized graphene of the present invention has an interplanar distance of about 3.558 Å (XRD 20 degree 25°) to about 4.790 Å (18.5°).

If the interplanar distance is less than about 3.558 Å, it means that there is a lack or absence of a functional group capable of physicochemical bonding to achieve hybridization, and if the interplanar distance is greater than about 4.790 Å, there is a problem in that physical properties of graphene are degraded.

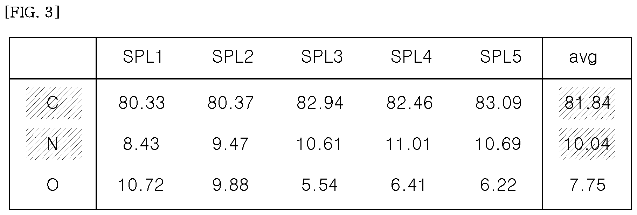

FIG. 3 is the composition analysis result of functionalized graphene in accordance with an exemplary embodiment of the present invention. Referring to FIG. 3, it can be seen that the functionalized graphene of the present invention includes about 73 atomic% to about 90 atomic% of carbon (C), about 5 atomic% to about 25 atomic% of oxygen (O), and about 2 atomic% to about 20 atomic% of nitrogen (N).

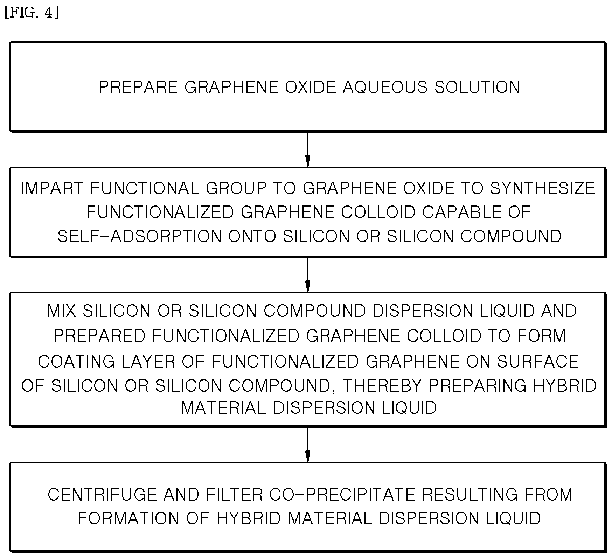

FIG. 4 is a schematic flow chart of a method for manufacturing a hybrid material in accordance with an exemplary embodiment of the present invention.

First, a step of preparing a graphene oxide aqueous solution of is performed. In the step of preparing a graphene oxide aqueous solution, the graphene oxide aqueous solution may be prepared by proceeding with an exfoliation process using graphite oxide produced by Hummers and Improved Method or using graphite oxide that is commercially available.

Next, a step of imparting a functional group to the graphene oxide to synthesize a functionalized graphene colloid capable of self-adsorption onto silicon or a silicon compound is performed. In this step, an additive for forming a functional group is added to the graphene oxide aqueous solution, stirred, and then ultrasonically dispersed to impart a functional group to the graphene oxide so as to form functionalized graphene. Specifically, about 50 parts by weight to about 150 parts by weight of an additive is added to about 100 parts by weight of the graphene oxide aqueous solution and stirred at about 90 °C to about 120 °C for about 12 hours to about 36 hours to form functionalized graphene. As the additive, an organic single molecule or polymer capable of forming an amine group or amide group may be used, and for example, any one selected from the group consisting of ethylenediamine, triethylamine, paraphenylenediamine, orthophenylenediamine, mesophenylenediamine, 3,3',4,4'-tetraaminobiphenyl, 3,3',4,4'-tetraaminoterphenyl, benzidine, 1,5-diaminonaphthalene, (E)-4,4'-(diazene-1,2-diyl)dianiline, ethylenediamine, 1,6-diaminohexane,1,8-diaminooactne, 4,4-oxidianiline may be used. Once the stirring is completed, 1 ton of a functionalized graphene colloid is manufactured per hour through a high-volume circulation-type ultrasonic dispersion system. The manufactured functionalized graphene is characterized in that the amount of a functional group is controlled such that the interplanar distance is about 3.558 Å to about 4.790 Å. For reference, the amount of a functional group to be introduced may be determined by adjusting the amount of an additive, the stirring temperature, and the stirring time. More specifically, the ratio of an additive and graphene oxide, and the input timing and input speed of the additive at the beginning of a reaction are controlled, and the stirring speed and the stirring time are important. In addition, the interplanar distance may be optimized through cleaning and purification processes after the reaction ends.

A step of preparing a hybrid material dispersion liquid is performed by mixing silicon or a silicon compound dispersion liquid and the prepared functionalized graphene colloid to form a coating layer of functionalized graphene on the surface of the silicon or silicon compound. At this time, since the functionalized graphene of the present invention has the property of being self-adsorbed onto the surface of silicon or a silicon compound, a hybrid material is created simply by mixing the silicon or silicon compound dispersion liquid and the prepared functionalized graphene colloid. Particularly, this step is characterized by not using a dispersion aid, or a bonding aid capable of helping silicon or a silicon compound bind to each other is used.

Next, a step of centrifuging and filtering coprecipitate resulting from the formation of the hybrid material dispersion liquid is performed, and a separated hybrid material may be washed with ethanol, separated, and dried to complete a final hybrid material.

A dispersion liquid (UCMG/SiO) in which the prepared functionalized graphene and spherical silicon oxide with a central particle diameter of about 10 um are dispersed in an ethanol solvent is prepared, a dispersion liquid in which only spherical silicon oxide with a central particle diameter of about 10 um is dispersed in an ethanol solvent (SiO) is prepared, and a dispersion liquid (BGO/SiO) in which graphene oxide and spherical silicon oxide with a central particle diameter of about 10 um are dispersed in an ethanol solvent is prepared.

The UCMG/SiO samples are prepared by respectively dispersing about 0.05 wt%, about 0.1wt%, about 0.2 wt%, about 0.3 wt%, and about 0.5 wt% of the functionalized graphene (functional group: amine group, interplanar distance of about 0.3762 nm) with respect to about 100 wt% of silicon oxide in a dispersion liquid in which about 0.5 wt% of spherical silicon oxide with a central particle diameter of about 10 um is dispersed in the solvent.

The SiO sample is prepared by using only a dispersion liquid in which about 0.5 wt% of spherical silicon oxide with a central particle diameter of about 10 um is dispersed in the solvent, and graphene is not mixed therewith.

The BGOG/SiO samples are prepared by respectively dispersing about 0.05 wt%, about 0.1wt%, about 0.2 wt%, about 0.3 wt%, and about 0.5 wt% of graphene oxide (interplanar distance of about 0.9549 nm) with respect to about 100 wt% of silicon oxide in a dispersion liquid in which about 0.5 wt% of spherical silicon oxide with a central particle diameter of about10 um is dispersed in the solvent.

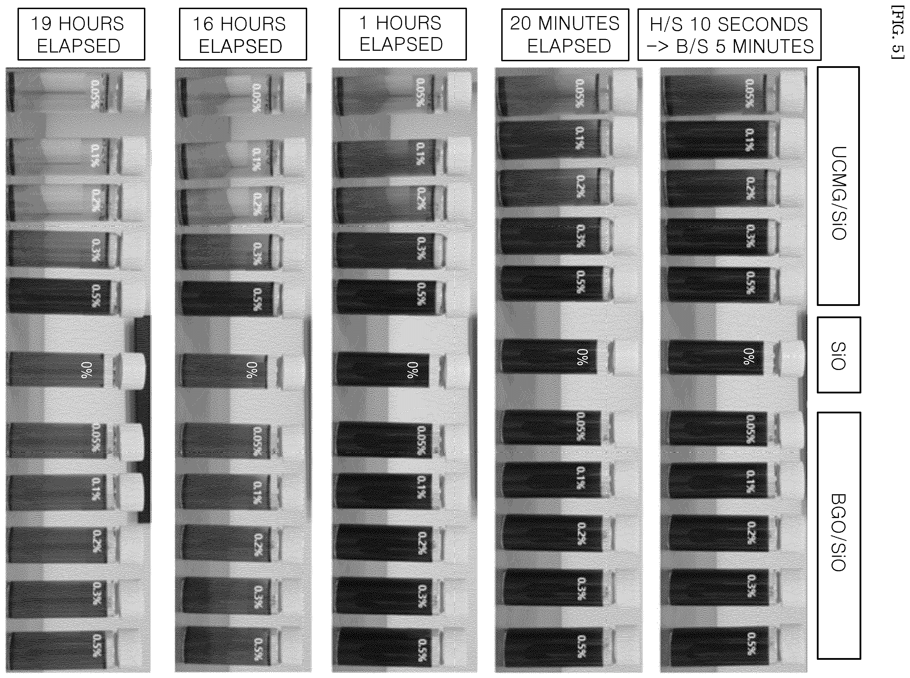

As shown in FIG. 5, in the case of the functionalized graphene of the present invention (UCMG/SiO), coprecipitation is clearly observed as the functionalized graphene is self-adsorbed onto the surface of the silicon oxide, but in the case of the dispersion liquid in which only the silicon oxide is dispersed (SiO) or in the case of the graphene oxide (BGO/SiO), it can be confirmed that no coprecipitation is observed. For reference, in FIG. 5, when the concentration of the functionalized graphene is about 0.3 wt% and about 0.5 wt% with respect to about 100 wt% of the silicon oxide, it can be confirmed that the dispersion liquid is opaque even after 19 hours has elapsed because the functionalized graphene not adhered to the silicon oxide remains. Meanwhile, as the concentration of the functionalized graphene increases with respect to about 100 wt% of the silicon oxide, the thickness of a graphene layer formed on the surface of the silicon oxide increases.

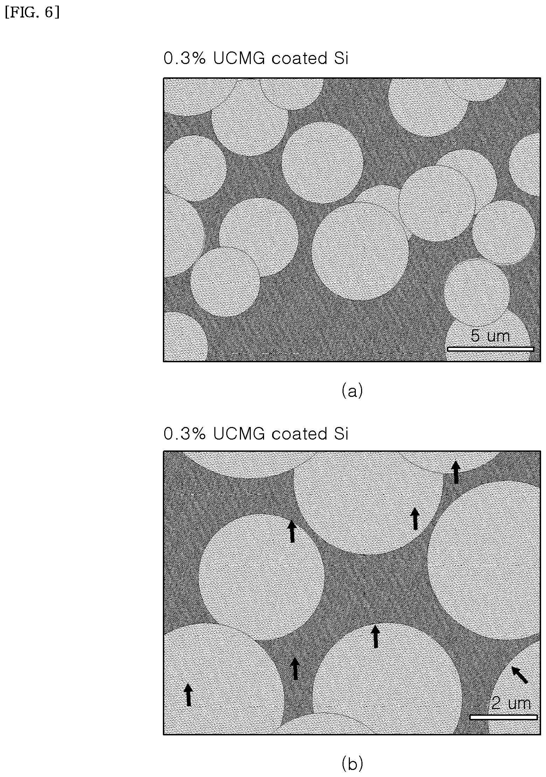

A dispersion liquid in which silicon particles with a central particle diameter of about 5 um and a colloid containing about 0.3 wt% of the functionalized graphene (UCMG) with respect to the silicon particles are simply mixed and then dried, and SEM images thereof are taken, the results of which are shown in FIG. 6. As shown in FIG. 6, it can be confirmed that a core-shell structure is spontaneously created simply by mixing a colloid of the functionalized graphene of the present invention and a silicon oxide dispersion liquid.

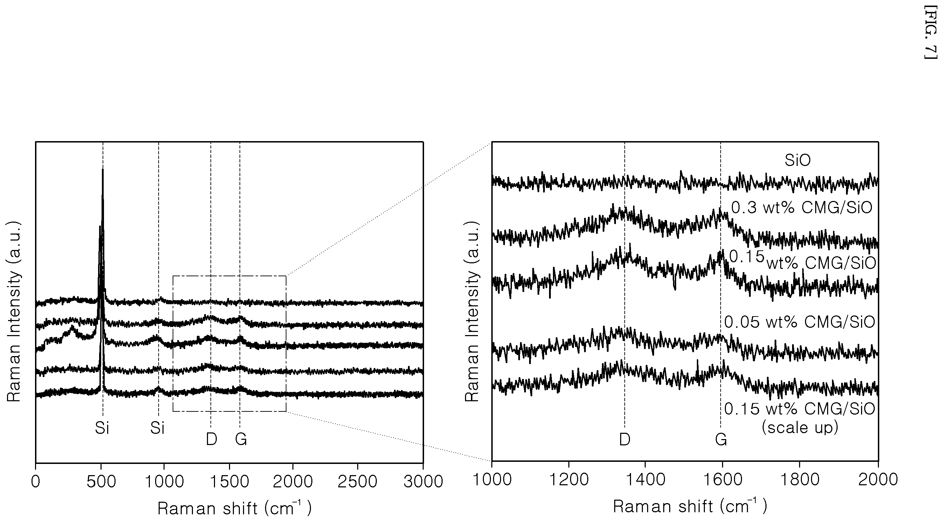

FIG. 7 is the Raman spectrum analysis result of a hybrid material in accordance with another exemplary embodiment of the present invention. As shown in FIG. 7, in the hybrid material of the present invention, the functionalized graphene is adsorbed on the surface of the silicon oxide, so that it can be confirmed that a D peak (1350 cm⁻¹) and a G peak (1580 cm⁻¹), which are not measured in a Raman spectrum analysis measured only on the silicon oxide, are measured. As described above, the fact that the D peak and the G peak are measured in the Raman spectrum analysis result of the hybrid material means that the functionalized graphene is adsorbed onto the surface of the silicon oxide.

A negative electrode material for a lithium secondary battery is manufactured using the hybrid material of the present invention, and the performance thereof is evaluated.

In Comparative Example 1, silicon oxide particles of about 5 um, artificial graphite, a conductive agent (super p black), and a binder (PVdF binder) were prepared as a negative electrode material composition with a weight ratio of about 40:40:10:10. The negative electrode material of Comparative Example 1 was prepared as a slurry by dissolving the polyvinylidene fluoride (PVdF) binder in a N-Methyl-2-Pyrrolidonethe (NMP) solvent, adding the silicon oxide particles, the artificial graphite, and the conductive agent thereto, followed by stirring the mixture by using a homomixer for about 1 hour. The prepared slurry was coated to a thickness of about 75 um on a copper current collector having a thickness of about 15 um, dried at about 115 °C for about 2 hours, and then pressed, and dried in a vacuum oven at about 120 °C for about 4 hours to completely remove the solvent, thereby manufacturing an electrode. By using the manufactured electrode as a negative electrode, lithium metal foil as a positive electrode, a polyethylene separator, and 1.2 M of LiPF6 + EC/DEC/FEC=2/6/2 (v/v) (3:7 weight ratio) electrolyte solution, a coin half-cell (CR2032) was manufactured, and charge and discharge properties thereof were evaluated.

Example 1 used a negative electrode composition composed of the hybrid material (UCMG(0.01 wt%, functional group: amine group, interplanar distance of about 0.3762 nm)/SiO (central particle diameter: about 5 um) of the present invention containing about 0.01 wt% of the functionalized graphene with respect to 100 wt% of the silicon oxide, artificial graphite, a conductive agent (super p black), and a bonding agent (PVdF binder) at a weight ratio of about 40:40:10:10, and a lithium secondary battery was manufactured in the same manner as in Comparative Example 1.

Examples 2 to 14 used a negative electrode material composition of the same composition as that of Example 1, while increasing the content of the functionalized graphene from about 0.02 wt% to about 10 wt% with respect to 100 wt% of the silicon oxide of the hybrid material, and a lithium secondary battery was manufactured in the same manner as in Comparative Example 1.

Comparative Example 2 used a negative electrode material composition composed of graphene flakes having a lateral size of about 2 um and a thickness of about 5 nm, silicon oxide particles of about 5 um, artificial graphite, a conductive agent (super p black), and a binder (PVdF binder) at a weight ratio of about 0.4:40:40:10:9.6, and a lithium secondary battery was manufactured in the same manner as in Comparative Example 1.

Charge was performed with a current of about 0.24 mA (1 C/20) in a voltage range of about 0.2 V to about 1.5 V, or charge was performed with a constant current of 130 mA/g up to about 0.001 V, and then up to 65 mA/g with a constant voltage. Discharge was performed at a constant current of about 130 mA/g up to about 1.5 V. The charge and discharge were repeated 50 times to evaluate charge and discharge properties. Initial efficiency (%) was calculated by "one time discharge capacity / one time charge capacity × 100." The results are shown in Table 1.

The results of evaluating the performance of the negative electrode materials of lithium secondary batteries of Comparative Examples and Examples are shown in Table 1 below.

**[Table 1]**

| Number | Content of functional! zed graphene with respect to silicon (wt%) | Graphene coating layer thickness (nm) | Charge capacity (mAh/g) | Discharge capacity (mAh/g) | Initial efficiency (%) | Capacity retention rate (50 times) (%) |
|---|---|---|---|---|---|---|
| Comparative Example 1 | 0 | 0 | 1689.9 | 1145.3 | 76.5 | 38.8 |
| Example 1 | 0.01 | 0.6 | 1721.4 | 1553.3 | 90.2 | 82.1 |
| Example 2 | 0.02 | 1.1 | 1721.1 | 1574.8 | 91.5 | 96.5 |
| Example 3 | 0.03 | 1.2 | 1721.0 | 1591.9 | 92.5 | 98.2 |
| Example 4 | 0.05 | 1.5 | 1721.3 | 1585.3 | 92.1 | 98.5 |
| Example 5 | 0.1 | 1.8 | 1721.3 | 1593.9 | 92.6 | 98.1 |
| Example 6 | 0.5 | 2.2 | 1717.1 | 1596.9 | 93.0 | 98.4 |
| Example 7 | 0.8 | 2.8 | 1714.5 | 1591.1 | 92.8 | 98.3 |
| Example 8 | 1 | 3.0 | 1712.8 | 1584.3 | 92.5 | 98.5 |
| Example 9 | 1.5 | 3.4 | 1707.6 | 1576.1 | 92.3 | 98.6 |
| Example 10 | 2 | 3.8 | 1704.2 | 1569.6 | 92.1 | 98.5 |
| Example 11 | 3 | 4.2 | 1695.6 | 1558.2 | 91.9 | 98.7 |
| Example 12 | 5 | 4.8 | 1678.4 | 1547.5 | 92.2 | 98.5 |
| Example 13 | 7 | 5.8 | 1210.1 | 1102.4 | 91.1 | 98.8 |
| Example 14 | 10 | 8.2 | 865.9 | 799.2 | 92.3 | 98.9 |
| Comparative Example 2 | 1 | 0 | 1702.2 | 1317.5 | 77.4 | 43.1 |

Referring to Table 1, Comparative Example 1 has an initial efficiency of about 76.4% and a capacity retention rate of about 38.8% after 50 cycles of the charge and discharge, which clearly shows a decrease in lifespan due to the contraction and expansion of the silicon negative electrode material during the charge and discharge.

However, in the case of Examples 1 to 14, as the hybrid material is used as the negative electrode material, it can be seen that the initial efficiency and capacity retention rate are significantly improved compared to those of Comparative Example 1. This means that the functionalized graphene of the present invention is physicochemically bonded to the surface of the silicon oxide, thereby maintaining the electrode continuously firmly in response to the volume expansion and contraction of the silicon oxide.

However, in the case of about 0.01 wt% of the functionalized graphene with respect to the silicon oxide particles (Example 1), it can be seen that the initial efficiency and the capacity retention rate are lower than those of other Examples because a functionalized graphene network is insufficient and a sufficient thickness is not formed, and in the case of greater than about 5 wt% of the functionalized graphene with respect to the silicon oxide particles (Example 13 and Example 14), the excessive formation of a graphene network and the formation of a graphene coating layer with a thickness more than necessary block the path of lithium ions, so that the charge capacity is degraded. Therefore, it is preferable that the content of the functionalized graphene with respect to the silicon oxide particles is about 0.02 wt% to about 5 wt%, and the functionalized graphene coating layer of the hybrid material is preferably about 1 nm to about 5 nm thick.

Meanwhile, Comparative Example 2 in which common graphene flakes were added showed slightly improved properties compared to Comparative Example 1, but was not able to form a strong chemical bond with the surfaces of the silicon oxide particles, so that it can be confirmed that Comparative Example 2 does not meet the properties of Examples of the present invention.

Next, the properties of secondary batteries with a functionalized graphene-based hybrid material, the functionalized graphene having a XRD 20 degree of about 18.5° to about 25° and a graphene interplanar distance of about 3.558 Å to about 4.890 Å, and the properties of secondary batteries with other types of graphene were confirmed.

Comparative Example 3 used a negative electrode material composition composed of a non-oxidized graphene-silicon oxide hybrid material containing about 1.0 wt% of the non-oxidized graphene with respect to the silicon oxide, artificial graphite, a conductive agent (super p black), and a binder (PVdF binder) at a weight ratio of about 40:40:10:10, and a lithium secondary battery was manufactured in the same manner as in Comparative Example 1. The non-oxidized graphene-silicon oxide hybrid material was prepared by mixing a non-oxidized graphene colloid and a silicon oxide dispersion liquid, and subjecting the mixture to centrifuging, filtering, washing, and drying.

Comparative Example 4 used a negative electrode material composition composed of a graphene oxide-silicon oxide hybrid material containing about 1.0 wt% of the graphene oxide with respect to the silicon oxide, artificial graphite, a conductive agent (super p black), and a binder (PVdF binder) at a weight ratio of about 40:40:10:10, and a lithium secondary battery was manufactured in the same manner as in Comparative Example 1. The graphene oxide-silicon oxide hybrid material was prepared by mixing a graphene oxide colloid and a silicon oxide dispersion liquid, and subjecting the mixture to centrifuging, filtering, washing, and drying.

Examples 15 to 18 used hybrid materials made of functionalized graphene with different measured interplanar distances, artificial graphite, a conductive agent (super p black), and a binder (PVdF binder) at a weight ratio of about 40:40:10:10, and a lithium secondary battery was manufactured in the same manner as in Comparative Example 1. At this time, the content of functionalized graphene to be included was about 1 wt% with respect to about 100 wt% of silicon oxide.

Table 2 below shows the results of the evaluation of a zeta potential value according to an interplanar distance of graphene, the evaluation of dispersibility when preparing a dispersion sol without a dispersion aid, and the hybridization caused by spontaneous adsorption of silicon particles and graphene.

The dispersibility evaluation is based on the aggregation, creaming, or sedimentation of graphene within a graphene colloid, and when the aggregation, creaming, or sedimentation was observed from the beginning of dispersion, it was marked as insufficient, when the sedimentation was preferentially observed after a certain period of time, it was marked as average, and when a stable state was maintained for more than a week without the aggregation, creaming, or sedimentation, it was marked as excellent.

The hybridization of silicon or silicon compound particles was based on the appearance of coprecipitation with silicon after mixing graphene with a content of 0.1 wt% with respect to silicon oxide in a silicon oxide dispersion liquid, and when the coprecipitation was not observed, it was marked as X, when coprecipitation was partially observed but there was layer separation, it was marked as △, and when the coprecipitation was observed without layer separation, it was marked as ⊚.

Meanwhile, the results of evaluating the performance of the negative electrode materials of lithium secondary batteries of Comparative Examples and Examples are shown in Table 3 below.

**[Table 2]**

| | Graphene type | XRD 2θdegree | Interplanar distance [Å] | Zeta potential [mV] | Dispersibi lity | Silicon or silicon compound particle hybridization |
|---|---|---|---|---|---|---|
| Comparative Example 3 | Non-oxidized graphene | 26.25 | 3.391 | 0 | Poor | X |
| Comparative Example 4 | Graphene oxide | 9.25 | 9.549 | - 35.2 | Excellent | Δ |
| Example 8 | Functionalized graphene-1 | 23.62 | 3.762 | + 50.6 | Excellent | ⊚ |
| Example 15 | Functionalized graphene-2 | 22.83 | 3.891 | + 51.5 | Excellent | ⊚ |
| Example 16 | Functionalized graphene-3 | 21.2 | 4.186 | + 54.5 | Excellent | ⊚ |
| Example 17 | Functionalized graphene-4 | 25.6 | 3.476 | + 26.3 | Average | Δ |
| Example 18 | Functionalized graphene-5 | 18.2 | 4.869 | + 12.7 | Poor | Δ |

**[Table 3]**

| | Graphene type | XRD 2θ degree | Interplanar distance [Å] | Initial discharge capacity (mAh/g) | Charge/discha rge initial efficiency (%) | 50-Cycle capacity retention rate (%) |
|---|---|---|---|---|---|---|
| Comparative Example 3 | Non-oxidized graphene | 26.25 | 3.391 | 1317.5 | 77.4 | 43.1 |
| Comparative Example 4 | Graphene oxide | 9.25 | 9.549 | 806.5 | 75.3 | 55.1 |
| Example 8 | Functionalized graphene-1 | 23.62 | 3.762 | 1584.3 | 92.5 | 98.5 |
| Example 15 | Functionalized graphene-2 | 22.83 | 3.891 | 1593.1 | 92.8 | 98.7 |
| Example 16 | Functionalized graphene-3 | 21.2 | 4.186 | 1582.5 | 92.1 | 98.4 |
| Example 17 | Functionalized graphene-4 | 25.6 | 3.476 | 1395.2 | 82.4 | 58.6 |
| Example 18 | Functionalized graphene-5 | 18.2 | 4.869 | 986.2 | 79.8 | 68.2 |

The non-oxidized graphene of Comparative Example 3 lacks a functional group for forming a hybrid material, and thus, has an interplanar distance of graphene of about 3.5 Å. Particularly, the non-oxidized graphene of Comparative Example 3 has a low zeta potential of about 0 mV, and thus, is insufficient in dispersibility, and is self-adsorbed onto the silicon oxide particles, and thus, is not able to be hybridized. Furthermore, the non-oxidized graphene of Comparative Example 3 does not have a functional group, and thus, is not able to have any interaction with the silicon oxide. Accordingly, it can be seen that the non-oxidized graphene of Comparative Example 3 has a low initial capacity and a low capacity retention rate when applied as a negative electrode material.

The graphene oxide of Comparative Example 4 has a zeta potential of about -35.2 mV, and thus, has excellent dispersibility. However, since the surface potential of the graphene oxide of Comparative Example 4 is negative (-), the graphene oxide of Comparative Example 4 is self-adsorbed onto the silicon oxide particles, and thus, is not be able to be hybridized. Furthermore, the graphene oxide of Comparative Example 4 does not have a functional group, and thus, is not able to have any interaction with the silicon oxide. However, the graphene oxide of Comparative Example 4 has a very large interplanar distance of about 9.549 Å due to a defective structure caused by oxidation, has a very low initial capacity due to inhibition of adsorption and desorption of lithium ions by high resistance, and has a significantly reduced capacity due to contraction and expansion of silicon during charge and discharge caused by the structural defect, so that it can be confirmed that lifespan properties of the graphene oxide of Comparative Example 4 are inferior to those of Examples.

Meanwhile, Example 17, which has an interplanar distance of about 3.5 Å or less due to the lack of a functional group introduced on the graphene surface, has a zeta potential of about 25.6 mV, thereby having an average level of dispersibility of graphene, but due to the lack of a functional group, has an insufficient bonding force between graphene and silicon, which is capable of suppressing the contraction and expansion of the silicon, and exhibits degradation in initial charge and discharge efficiency and degradation in capacity retention rate properties.

Example 18 has poor dispersibility, and has many remaining oxidation groups not functionalized on the surface of graphene, and thus, exhibits significant degradation in initial efficiency caused by degradation in electrical properties, and due to the lack of a functional group capable of forming a bond with respect to the surfaces of the silicon particles, has degradation in capacity retention rate properties.

In comparison, it can be seen that Example 8, Example 15, and Example 16 which satisfy an interplanar distance of about 0.3558 nm to about 0.4790 nm have high dispersibility, and have an initial efficiency and a capacity retention rate which are significantly improved compared to those of Comparative Examples 3 and 4. This means that the functionalized graphene of the present invention, which satisfies an interplanar distance of about 0.3558 nm to about 0.4790 nm, is physicochemically bonded to the surface of silicon oxide, thereby maintaining the electrode continuously firmly in response to the volume expansion and contraction of the silicon oxide.

The scope of protection of the present invention is not limited to the description and expression of the embodiments explicitly described above. In addition, it should be added once again that the scope of protection of the present invention may not be limited due to obvious changes or substitutions in the technical field to which the present invention pertains.

## Claims

1. Functionalized graphene having a functional group self-adsorbed onto silicon or a silicon compound,
wherein the functionalized graphene has an interplanar distance of about 0.3558 nm to about 0.4790 nm.

2. The functionalized graphene of claim 1, wherein the functionalized graphene comprises about 73 atomic% to about 90 atomic% of carbon (C), about 5 atomic% to about 25 atomic% of oxygen (O), and about 2 atomic% to about 20 atomic% of nitrogen (N).

3. The functionalized graphene of claim 1, wherein the functionalized graphene has a zeta potential of about 40 mV or greater.

4. The functionalized graphene of claim 1, wherein the functional group of the functionalized graphene is an amine group or an amide group.

5. A hybrid material comprising:
silicon or a silicon compound; and
functionalized graphene self-adsorbed onto the surface of the silicon or the silicon compound,
wherein the functionalized graphene has an interplanar distance of about 0.3558 nm to about 0.4790 nm.

6. The hybrid material of claim 5, wherein the functionalized graphene is bonded to the surface of the silicon or the silicon compound by electrostatic bonding, hydrogen bonding, and covalent bonding.

7. The hybrid material of claim 5, wherein the hybrid material exhibits a D peak and a G peak in a Raman spectrum.

8. The hybrid material of claim 5, wherein the content of the functionalized graphene with respect to the silicon or the silicon compound is about 0.02 wt% to about 5 wt%.

9. The hybrid material of claim 5, wherein the silicon compound is silicon oxide.

10. The hybrid material of claim 5, wherein the hybrid material comprises:
a core composed of a single particle or a plurality of particles of the silicon or the silicon compound; and
a shell formed on the surface of the core, and formed of the functionalized graphene.

11. A negative electrode material for a lithium secondary battery, the negative electrode material comprising:
a hybrid material, graphite, a conductive agent, and a binder, wherein the hybrid material includes:
silicon or a silicon compound; and
functionalized graphene self-adsorbed onto the surface of the silicon or the silicon compound,
wherein the functionalized graphene has an interplanar distance of about 0.3558 nm to about 0.4790 nm.
